# EUROPEAN PATENT SPECIFICATION

(11) **EP 1 942 648 B1**
(45) Date of publication and mention of the grant of the patent: **14.05.2014**
(21) Application number: 06761588.0
(22) Date of filing: 27.07.2006
(51) Int. Cl.: H04M 7/12, H04L 29/06

(54) **PROCESSING METHOD FOR BEARER CONTROL**
VERARBEITUNGSVERFAHREN ZUR TRÄGERKONTROLLE
METHODE DE TRAITEMENT DE CONTROLE DE SUPPORT

(30) Priority: 31.08.2005 CN 200510093909
(43) Date of publication of application: 09.07.2008
(60) Divisional application: 14152603.8
(73) Proprietor: Huawei Technologies Co., Ltd., Longgang District, Shenzhen Guangdong 518129 (CN)
(72) Inventor: ZHU, Dongming, Huawei Technologies Co.,Ltd., Longgang District Shenzhen Guangdong 518129 (CN); XU, Peili, Huawei Technologies Co.,Ltd, Longgang District Shenzhen Guangdong 518219 (CN); LIN, Ming, Huawei Technologies Co.,Ltd., Longgang District Shenzhen Guangdong 518129 (CN); DUAN, Xiaoqin, Huawei Technologies Co.,Ltd., Longgang District Shenzhen Guangdong 518129 (CN)
(74) Representative: Gleiter, Hermann
(86) International application number: PCT/CN2006/001870
(87) International publication number: WO 2007/025447

(56) References cited:
- CN-A- 1 469 605
- CN-A- 1 575 576
- US-A1- 2005 083 909
- US-A1- 2005 083 912
- ANDREASEN B FOSTER CISCO SYSTEMS F: "Media Gateway Control Protocol (MGCP) Version 1.0; rfc3435.txt", IETF STANDARD, INTERNET ENGINEERING TASK FORCE, IETF, CH, 1 January 2003 (2003-01-01), XP015009218, ISSN: 0000-0003

## Description

### Field of the Invention

The present invention relates to bearer control technologies in communication field, and more particularly, to a method for processing bearer control.

### Background of the Invention

Beginning from the 3rd Generation Partnership Project (3GPP) Release 5, Core Network of Universal Mobile Telecommunications System (UMTS) has been divided into Circuit Switched (CS) Domain, Packet Switched (PS) Domain, and IP Multimedia Subsystem (IMS), wherein;
the CS domain is used for providing connections of circuit switched services for the subscribers; the PS domain is used for providing connections of packet switched services for the subscribers; and the IMS is a subsystem introduced on the basis of the existing PS domain in the Wideband Code Division Multiple Access (WCDMA) network in 3GPP Release 5. The IMS employs PS domain as a bearer channel of its upper-layer control signaling and media transmission, introduces Session Initiation Protocol (SIP) as a service control protocol, and provides abundant multimedia services by separating the service control and the bearer control and utilizing the characteristics of the SIP, i.e. simple, extensible and convenient for media combination.

The IMS architecture defined by 3GPP standard comprehensively resolves the critical operability problems such as roaming charging, guarantee of quality of service (QoS) and safety, and so on, which need to be solved to provide multimedia services based on IP bearer. In addition, 3GPP has begun to study subjects such as All-IP network (AIPN) which aims to support various access technologies. A subscriber can access to the IMS via various access networks by using different access technologies with a single multimode terminal or various types of terminals according to his/her subscription, to obtain uniform multimedia services.

Under such a technical background, along with the development of IMS, the relationship between the traditional CS network and IMS network will gradually change from the simple call interworking to service convergence in different levels. During the developing process, a kind of call scenario, CS→IMS→CS, will be met frequently, that is □ a call is originated from a CS network, routed to an IMS network according to the routing control of the CS network to trigger a specific service control, and then routed back to a CS network to connect the called subscriber.

In the IMS, the interworking between the IMS network and the CS network is implemented by the cooperation of the Media Gateway Control Function (MGCF) and the IMS Media Gateway (IM-MGW).

In detail, the MGCF accomplishes the interaction between the IMS core control plane and the CS network, supports the interaction and the interworking between the ISDN User Part (ISUP) protocol and SIP protocol, or between the Bearer Independent Call Control (BICC) protocol and the SIP protocol, and controls IMS Media Gateway (IM-MGW) by using H.248 protocol to accomplish the real-time conversion between the user plane data born over Time Division Multiplex (TDM) bearer in CS network and the user plane Real-time Transport Protocol (RTP) stream born over internet protocol (IP) bearer in IMS domain.

The IM-MGW accomplishes the necessary transcoding and the real-time conversion between the wideband bearer on the user plane of the IMS and narrowband bearer on the user plane of the CS network, such as the conversion between the RTP stream born over the IP bearer and the data born over the TDM bearer.

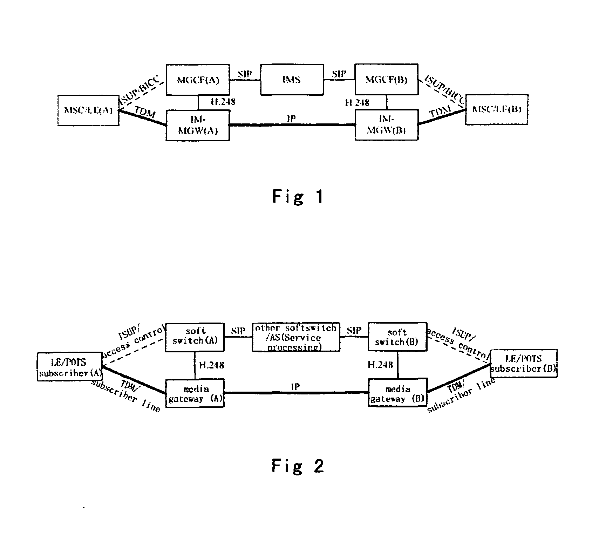

Therefore, in the case of CS→IMS→CS, processing of the IMS/CS interworking gateway (MGCF/IM-MGW) will be respectively introduced on the call segment CS→IMS and the call segment IMS→CS. When the CS employs the TDM bearer, the control plane and the user plane connection of such a CS→IMS→CS call is shown as Fig. 1.

In the following descriptions, if there is no special explanation, the CS network refers to the Public Switched Telephone Network (PSTN) and the CS domain of the Public Land Mobile Network (PLMN).

As shown in Fig.1, the control entity MGCF (A) of the IM-MGW (A) accomplishes a conversion from the ISUP/BICC protocol to the SIP protocol respectively used in the CS Mobile Switching Center (MSC) or Local Exchange (LE) (A) and the IMS control plane, and accomplishes the necessary transcoding and conversion from the TDM bearer at CS side to the IP bearer at IMS side on the user plane by controlling IM-MGW (A) with H.248 protocol; on the contrary, the control entity MGCF (B) of the IM-MGW (B) accomplishes a conversion from the SIP protocol to the ISUP/BICC protocol respectively used in the IMS control plane and CS Mobile Switching Center (MSC) or Local Exchange (LE) (B), and accomplishes the necessary transcoding and conversion from IP bearer at IMS side to TDM bearer at CS side on the user plane by controlling IM-MGW (B) with H.248 protocol.

It can be seen from Fig. 1 that the processing of RTP packing and unpacking is respectively introduced on the IMS media gateways (IM-MGW (A) and IM-MGW (B)) since there is a IP bearer segment between the two TDM bearer segments on the user plane. At the same time, the gateway (including the MGCF/IM-MGW) at the two sides may also select a codec for the IP bearer segment which is different from the original one used on the TDM bearer according to the local strategy. In this case, the IMS media gateways at the two sides further needs to perform the transcoding respectively.

The inventor finds out that in certain cases, the two gateways A and B (including MGCF/IM-MGW) may be located in one same physical entity, that is, the media stream is actually exchanged within one same physical media gateway entity. In this case, the call is viewed as two independent tandem calls on the perspective of MGCF since it is handled by the MGCF twice successively, although in fact it is one call in view of end to end. Thus although the media is finally exchanged within the same IM-MGW and the exchanged media is not actually passing an IP bearer segment, the MGCF will control the IM-MGW to exchange the media between the two IP ports allocated respectively for the IMS side of the call segment CS →IMS and the call segment IMS→CS according to the related art since the two call control instances are independent of each other on the MGCF and the correlated data can not be associated and shared. Therefore, the user plane data received in the TDM circuit of the segment CS→IMS are packed to RTP package, then exchanged between two IP ports, and subsequently unpacked from RTP package and to be sent to the TDM circuit of the segment IMS→CS. At the same time, if the media at the two sides select a codec different from the original one used on Circuit call through the media negotiation during the IMS session establishment, the above processing further includes double transcoding. In fact, the user plane data streams between the TDM circuit of the segment CS→IMS and that of the segment IMS →CS do not really leave the IM-MGW entity, so the RTP packing, the RTP unpacking and the transcoding processing are not necessary.

In other words, in the specific case described above, the existing processing method for bearer control will result in the redundant RTP packing and unpacking processing and probably additional redundant transcoding processing. It will then increase the processing burden of system and the latency of the processing, and thus has a negative influence on the service quality of the transmitted media stream.

The inventor also finds out that in a softswitch located in a mixing configured network as shown in Fig. 2, there may be similar problems. For example, the control entity of the media gateway (A), i.e. softswitch (A), receives an incoming call from a local exchange (LE) connected with a TDM circuit or an intra-office originating call originated by a Plain Ordinary Telephone Service (POTS) subscriber (A), after the route analysis or the service trigger judgment, it routes the call to another entity connected with an IP bearer (such as another softswitch or application server (AS)); after corresponding service processing such as call forwarding, the call is further routed by that entity to a softswitch (B), which is the control entity of the media gateway (B), and is then be routed by the softswitch (B) to an LE(B) connected to the softswitch (B) with a TDM circuit or a POTS subscriber (B) served by softswitch(B). In the case that the gateway (A) (including the softswitch (A) and the media gateway (A)) and the gateway (B) (including the softswitch (B) and the media gateway (B)) are located within the same physical entity (gateway(A)=gateway(B)), on this gateway, the call is similarly processed by the softswitch twice successively and separately, although in fact, the media stream is exchanged within the same media gateway administrated by the softswitch. Therefore, the above problem in the call scenario CS→IMS→CS described with reference to Fig. 1 is still present.

In other words, in the specific case described above, processing the call according to the existing bearer control processing method will cause redundant transcoding processing and redundant RTP packing and unpacking processing. It will then increase the processing burden of the system and also the latency of the processing, and has a negative influence on the service quality of the transmitted media stream.

In Fig. 2, the media gateway can be a general media gateway (MGW), or an access media gateway (AG), or a residential media gateway which can also be named as Integrated Access Device (IAD). The control entity is the one corresponding to the media gateway, i.e. a softswitch controlling the MGW, AG, or IAD.

US 2005/083912 A1 (AFSHAR SIROOS K et. al), D1, discloses a scalable VoIP system, which decompose the SIP BE into separate communicating entities that make the SIP BE scalable and provide new capabilities including optimization of functions and economies of scale not available by a self-contained SIP BE.

ANDREASEN B FOSTER CISCO SYSTEM F: "Media Gateway Control Protocol (MGCP) Version 1.0", D2, discloses technical specification of interacting between MGW and MGC.

### Summary of the Invention

One of the embodiments provides a method for processing bearer control. For a scenario that a call originated from a TDM bearer based network domain or an intra-office POTS subscriber is routed to an IP bearer based network domain, and then routed from the IP bearer based network domain back to a TDM bearer based network domain or an intra-office POTS subscriber, in the case that the gateways for processing the two segment calls are one same physical entity, the method of the present invention avoids the unnecessary processing of RTP packing and unpacking and possible transcoding for the media stream in the prior art, thereby avoid the additional processing burden of system and the negative influence on QoS of the exchanged media stream due to the additional latency for such unnecessary processing.

According to an aspect of the present invention, a method for processing bearer control is provided. In the method, a first control entity routes a call which is routed from a TDM bearer based network domain or originated by an intra-office POTS subscriber, into an IP bearer based network domain; a second control entity receives the call which is routed back from said IP bearer based network domain and said call is destined to the TDM bearer based network domain or the intra-office POTS subscriber; and when it's determined that a media stream that enters into and exits from said IP bearer based network domain is exchanged on the same media gateway, the first and the second control entities perform a media negotiation during the SIP session to select a same media codec type as the one used on TDM circuits or subscriber lines at two sides, and control a corresponding media gateway to transmit the media stream according to said selected media codec type.

The method further includes step of locating the first control entity and the second control entity within a same physical entity, and configuring in advance with IP addresses that can be used by all the media gateways managed by the control entities.

The second control entity determines whether the media stream which enters into and exits from the IP bearer based network domain is exchanged on the same physical media gateway, according to the originating side IP address of the exchanged media stream transmitted during the negotiation of session description protocol (SDP) and the media gateway which is selected for the call by the second control entity.

Session related information is carried in the call routed by the first control entity.

The second control entity determines whether the media stream that enters into and exits from the IP bearer based network domain is exchanged on the same media gateway according to said session related information.

The session related information is concrete information correlated with bearer control of the call segment from the TDM bearer based network or the intra-office POTS subscriber to the IP bearer based network; or the session related information is session index information, and according to the index information, the second control entity determining whether it is located within the same physical entity as the first control entity, locating a call record of the call segment from the TDM bearer based network or the intra-office POTS subscriber to the IP bearer network, which is stored in the first control entity, and obtaining the concrete information correlated with the bearer control of the call segment from the TDM bearer based network or the intra-office POTS subscriber to the IP bearer network.

The session related information also can be carried in a specific head field of a SIP message, or a SIP message body, or a specific line in the SDP, or an expanded line in the SDP.

An intermediate network element in the IP bearer based network transmits the session related information transparently.

The first control entity takes the media codec type used at the first control entity's TDM circuit or subscriber line as one of options in an offer SDP description. The second control entity selects the media codec type in an answer SDP description responded to the first control entity.

The second control entity refuses all the options in the offer SDP description which is provided by said first control entity, and provides the media codec type used in the TDM circuit or subscriber line side in the call segment from the IP bearer based network domain to the TDM bearer based network domain or the intra-office POTS subscriber in a new offer SDP description. The first control entity selects the media codec type in an answer SDP description responded to the second control entity.

The second control entity carries an additional indication in the new offer SDP description to indicate the first control entity to accept the offer codec type unconditionally; and the first control entity accepts the offer codec type unconditionally according to the indication.

The IP bearer based network domain is an IMS network domain, the media gateway is an IMS media gateway (IM-MGW), and the control entity is an media gateway control function (MGCF) for controlling the IMS media gateway; or the media gateway is a general media gateway (MGW), or an access media gateway (AG), or a residential media gateway which can also be named as Integrated Access Device (IAD), the control entity is a softswitch for controlling the MGW, or AG, or IAD, and the IP bearer based network domain is a softswitch network domain based on IP bearer which is another softswitch or an application server connected to the control entity with an IP bearer.

According to another aspect of the present invention, a method for processing bearer control is provided. In the method, a first control entity routes a call which is routed from a TDM bearer based network domain or originated by an intra-office POTS subscriber, into an IP bearer based network domain, and carries a session related information in a sent SIP message; a second control entity receives the call which is routed back from said IP bearer based network domain, said call is destined to a TDM bearer based network domain or an intra-office POTS subscriber; when determining that a media stream that enters into and exits from said IP bearer carrier network domain is exchanged on the same media gateway according to the session related information, the first control entity and/or the second control entity control the media gateway to directly connect TDM circuit ports or subscriber line ports at two sides to transmit the media stream.

The session related information is concrete information correlated with a bearer control of the call segment from the TDM bearer based network or the intra-office POTS subscriber to the IP bearer based network, which includes at least one of an identifier of an originating side media gateway, an identifier of the first control entity corresponding to the originating side media gateway, and a context identifier, and/or a termination identifier.

The method further includes step of locating the first control entity and the second control entity within a same physical entity and controlling a same physical media gateway; or locating the first control entity and the second control entity in two independent physical control entities, and respectively controlling two different logical media gateways which are located within a same physical media gateway.

The session related information can also be session index information; and according to the index information, the second control entity locates a call record of the call segment from the TDM bearer network or the intra-office POTS subscriber to the IP bearer network, which is stored in the first control entity, and obtaining the concrete information correlated with the bearer control of the call segment from the TDM bearer based network or the intra-office POTS subscriber to the IP bearer network, where the information includes at least one of an identifier of an originating side media gateway, a context identifier, and a termination identifier.

The session related information also can be carried in a specific head field of a SIP message, or a SIP message body, or a specific line in the SDP, or an expanded line in the SDP, to transmit the information to the second control entity.

An intermediate network element in the IP bearer based network transmits the session related information transparently.

The first and the second control entity select a same media codec type as the one used in the TDM circuit or subscriber line at two sides by performing the media negotiation during the SIP session.

The first control entity takes the media codec type used in the native side's TDM circuit or subscriber line as one of options in an offer SDP description; and the second control entity selects the media codec type in an answer SDP description responded o the first control entity.

The second control entity refuses all the options in the offer SDP description provided by said first control entity, and provides the media codec type used in the TDM circuit or subscriber line side in the call segment from the IP bearer based network domain to the TDM bearer based network domain or the intra-office POTS subscriber in a new offer SDP description; and the first control entity selects the media codec type in an answer SDP description responded to said second control entity.

The second control entity carries an additional indication in the new offer SDP description to indicate the first control entity to accept the offer codec type unconditionally; and the first control entity accepts the offer codec type unconditionally according to the indication.

The IP bearer based network domain is an IMS network domain, the media gateway is an IMS media gateway (IM-MGW), and the control entity is an media gateway control function (MGCF) for controlling the IMS media gateway; or the media gateway is a general media gateway (MGW), or an access media gateway (AG), or a residential media gateway (IAD), the control entity is a softswitch for controlling the MGW, or AG, or IAD, and the IP bearer based network domain is a softswitch network domain based on IP bearer which is another softswitch or an application server connected to the control entity with an IP bearer.

In the present invention, for the scenario that a call originated from a TDM bearer based network domain or an intra-office POTS subscriber is routed to an IP bearer based network domain, and then routed from the IP bearer based network domain back to a TDM bearer based network domain or an intra-office POTS subscriber, when the control entities of the media gateways determine that the media gateways for processing the two segment calls are the same physical entity, the optimization processing is performed. In this way, unnecessary processing of RTP packing and unpacking and possible transcoding are avoided, accordingly, the additional processing burden of system and the negative influence on QoS of the exchanged media stream due to the additional latency for such unnecessary processing is avoided, and the utilization efficiency of the network resource and the service experience of the subscribers are improved.

### Brief Description of the Drawings

Fig. 1 is a schematic diagram showing a scenario that a call is routed from a TDM bearer based network domain to an IP bearer based network domain, and then routed from the IP bearer based network domain back to the TDM bearer based network domain by taking the call scenario CS→IMS→CS as an example;
Fig. 2 is a schematic diagram showing a call scenario that a call originated from a TDM bearer based network domain or an intra-office POTS subscriber is received by a softswitch (A), then routed to and processed by another softswitch or an AS connected with IP bearer, and subsequently routed to a TDM bearer based network domain or an intra-office POTS subscriber by softswitch (B);
Fig. 3 is a flowchart illustrating a procedure for avoiding redundant transcoding by performing session negotiation;
Fig. 4 and 5 are flowcharts illustrating a procedure for resolving the problems of redundant transcoding, RTP packing and unpacking by adding session correlated information.

### Detailed Description of the Invention

The invention can be applied in a CS→IMS→CS scenario or similar scenario correlated with softswitch. Below, preferred embodiments will be shown.

Let us now clarify the terminology of the application. The CS→IMS→CS scenario or similar scenario correlated with softswitch, refers to that, a call is routed from a TDM bearer based network domain or an intra-office POTS subscriber to an IP bearer based network domain, and then routed from the IP bearer based network to a TDM bearer based network domain or an intra-office POTS subscriber. In detail, that is, when a CS and IMS are interworking, CS-IMS interworking gateway MGCF/IM-MGW (A) performs interworking for a call from a TDM bearer based CS domain and routes it to a relevant IP bearer based IMS node, and after IMS processing, CS-IMS interworking gateway MGCF/IM-MGW(B) performs interworking for the call and routes it to a TDM bearer based CS domain; or in a network including a softswitch networking, softswitch (A) routes a received call routed from a TDM bearer based network domain or originated by an intra-office POTS subscriber to a relevant node of the IP bearer based network domain, and after the call is processed by the relevant node of the IP bearer based network domain, softswitch (B) routes the call back to the TDM bearer based network domain or the intra-office POTS subscriber.

The scenario includes four cases shown as follows: a TDM bearer based network domain →an IP bearer based network domain→a TDM bearer based network domain, or a POTS subscriber→an IP bearer based network domain→a POTS subscriber, or a TDM bearer based network domain→an IP bearer based network domain→a POTS subscriber, or a POTS subscriber→an IP bearer based network domain→a TDM bearer based network domain. At the same time, in the case of a TDM bearer based network domain→an IP bearer based network domain→a TDM bearer based network domain, the two TDM bearer based network domains are not required to be the same one; and in the case of a POTS subscriber→an IP bearer based network domain→a POTS subscriber, the POTS subscribers can not be the same one.

The media gateway may be an IMS media gateway (IM-MGW), a general media gateway (MGW), an access media gateway (AG) or a residential media gateway which can also be named as Integrated Access Device (IAD); and the control entity is the control entity controlling the media gateways described above respectively, i.e. the Media Gateway Control Function (MGCF) controlling the IMS media gateway, or the softswitch controlling the MGW, AG, or IAD.

In the embodiment, when a control entity of a media gateway receives a call which is routed back from the IP bearer based network domain and destined to a TDM bearer based network domain or an intra-office POTS subscriber, if it is determined that the media stream is finally exchanged within the same physical media gateway, an optimization processing is performed as described in the following text in order to avoid the redundant processing of transcoding, RTP packing and unpacking for the media stream. The optimization processing may be a processing that the control entities select the same media codec type as that used in the TDM circuit or the Subscriber Line at two sides by performing media negotiation in a SIP session between the control entities, and control the media gateway to transmit the media stream according to the media codec type so as to avoid the possible transcoding processing, or a processing that the control entity controls the media gateway to directly connect the TDM circuit ports or the subscriber line ports at two sides to transmit the media stream, so as to avoid the redundant processing of RTP packing and unpacking and the possible transcoding, or the combination of above two processing.

The basis according to which the control entity determines that the media stream is finally exchanged within a same physical media gateway has two types as follows:

The first kind of the basis is the IP addresses of the exchanged media stream, which are transmitted during the negotiation of SDP between both sides. In this case, if it is determined that the media stream is finally exchanged within a same physical media gateway, the two control entities must be also located within the same physical entity.

The detailed method is as follows: On a control entity of the media gateway, the IP addresses that may be used by all the media gateways managed by the physical control entity are preset, and the IP addresses can be used to distinguish valid IP nodes within the range of the present network effectively. In this way, when the two logical control entities A and B described above are located within the same physical control entity, the second control entity, i.e. the MGCF (B) in Fig. 1 or the softswitch (B) in Fig. 2, can determine that the media stream that enters into or exits from the IP bearer based network domain is finally exchanged within the same physical media gateway according to the two sides' IP addresses of the exchanged media stream, which are transmitted during the SDP (Session Description Protocol) negotiation between two sides' control entities and with reference to the preset IP addresses which can be used by all the media gateways managed by the second control entity, specifically, according to the IP address of the source media gateway of the exchanged media stream which is transmitted during the negotiation of SDP and the IP address of the media gateway selected by the second control entity for the present call.

The second kind of basis is the first control entity, i.e. the MGCF(A) in Fig. 1 or the softswitch (A) in Fig. 2, which processes a call from the TDM bearer based network domain or an intra-office POTS subscriber to an IP bearer based network domain. In this case, the session related information may be added into the SIP message.

The session related information may be concrete information correlated with the bearer control of the call segment from the TDM bearer based network domain or the intra-office POTS subscriber to the IP bearer based network domain including a corresponding media gateway identifier, or session index information according to which the concrete information correlated with the bearer control of the call segment from the TDM bearer based network domain or the intra-office POTS subscriber to the IP bearer based network domain can be located.

The second control entity locates the concrete information according to the received session index information. In this way, the second entity, i.e. MGCF (B) in Fig. 1 or the softswitch (B) in Fig. 2, for processing the call segment from IP bearer based network domain to the TDM bearer based network domain or the intra-office POTS subscriber can determine that the media stream that enters into or exits from the IP bearer based network domain is finally exchanged within the same media gateway according to the session related information.

The session related information can be carried by a specific head field of a SIP message, such as the head field 'Via' representing the path passed by the message. Also it can be carried by the SIP message body or by an expanded line in the SDP. Also it can be carried by a specific line in the SDP, such as the 'o (owner/creator and session identifier)' line identifying the owner, the creator, and the session identifier, or the 'i (session information)' line identifying the session information.

In addition, while the session related information is carried in the SIP message, the intermediate network entity in the IP bearer based network domain determines not to process the information according to the specific head field of the SIP message, the concrete content of the message body, the specific line in the SDP or its content (the processing includes modifying, intercepting, authorization checking, refusing the service request, and so on), in another word, the intermediate network entity transparently transmits the session related information to ensure that the second control entity can receive the session related information, and thus determine whether the processed call from the IP bearer based network domain to the TDM bearer based network domain or the intra-office POTS subscriber belongs to the second segment of the two segments' call scenario of the TDM bearer based network domain/the intra-office POTS subscriber→the IP bearer based network domain→the TDM bearer based network domain/the intra-office POTS subscriber, and whether the media stream is finally exchanged within the same physical gateway.

When the second control entity determines that the processed call belongs to the second segment of the two segments' call scenario of the TDM bearer based network domain/the intra-office POTS subscriber→the IP bearer based network domain→the TDM bearer based network domain/the intra-office POTS subscriber, and the media stream is finally exchanged within the same physical gateway, the control entities select the same codec as the one used in TDM circuits or subscriber lines at two sides by performing a negotiation of SDP in the SIP session, which can be achieved by any one of the following methods:
1) The first control entity at the originating side takes the codec which is used in the TDM circuit or subscriber line as one of the options in the offer SDP description it provided, and the second control entity at the terminating side selects the codec in an answer SDP description it responded.
2) When the first control entity at the originating side does not take the codec which is used in the TDM circuit or subscriber line as one of the options in the offer SDP description it provided, the second control entity at the terminating side refuses all options provided by the first control entity in the answer SDP description it responded, and takes the codec which used in the TDM circuit or subscriber line as the option by providing a new offer SDP description, then the first control entity at the originating side selects the codec in an answer SDP description it responded. Further, the second control entity at the terminating side may attach an additional indication to the provided new SDP description so as to indicate the first control entity to unconditionally accept the provided codec when receiving it.

Let us take the scenario of CS→IMS→CS as an example, the detailed descriptions will be made hereinafter.

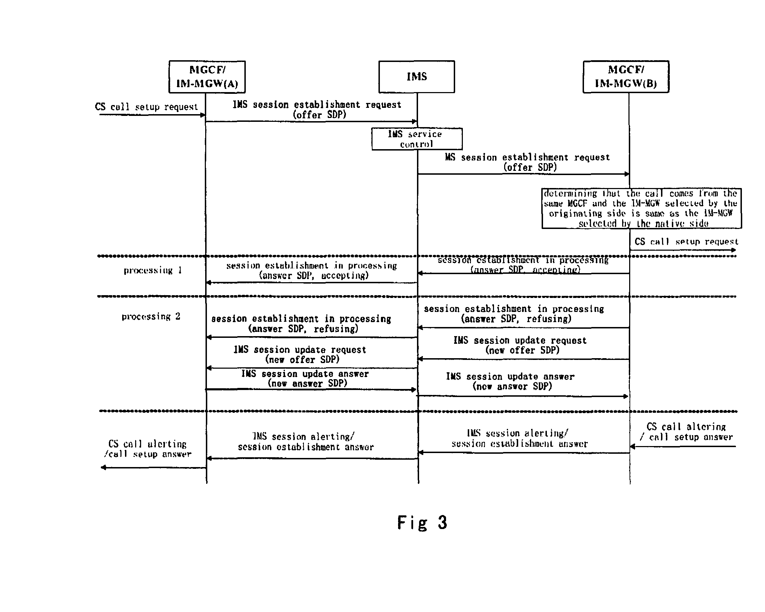

As shown in Fig.3 (and with reference to Fig.1), in the case of that no additional information is transmitted, the procedure of the second control entity, i.e. MGCF(B), making a determination according to the existing information and avoiding the processing of transcoding by performing the session negotiation is as follows:
Step101. When receiving a call setup request from the TDM bearer based CS domain, the MGCF (A) (the first control entity)at the originating side sends INVITE to the IP bearer based IMS domain. Said INVITE is an IMS session establishment request with offer SDP. The SDP carried in the message still is the information specified by the standard, i.e. the originating side offer SDP describing IP address information (originating side IP address) of the IP port used for the IMS side of the call segment of CS→IMS, and the selected codec.
Step102. After processed by the IMS domain, according to the service and the route control, the session is routed to the terminating side MGCF (B). After receiving the INVITE request from the IMS domain, according to the originating side IP address in the originating side's offer SDP and the configured IP address of the IM-MGWs it manages, the MGCF (B) determines whether the call comes from the same MGCF and the IM-MGW selected by the MGCF (A) (the originating side) is the same as the IM-MGW selected by the MGCF (B) which can arrive at the called party side, i.e. IM-MGW(A)=IM-MGW(B).

In this embodiment, that is, the IMS domain routes the session back to the originating side MGCF, in another word, here the terminating side MGCF is same as the originating side MGCF, i.e. MGCF(A)=MGCF(B).

Step103. According to the above determination, the MGCF (B) performs the Negotiation of SDP during the SIP session with the MGCF (A) and selects the same codec as that of the CS call for the IMS session.

The above Negotiation and selecting action can be achieved by one of the following different methods.

The first method is that: the offer SDP description sent from the originating side provides several optional codec types including the codec which is the same as the one used in the call from the CS domain; the MGCF (B) responds with an answer SDP in a SIP response message to select the codec used in the call from the CS domain.

The second method is that: the codec which is the same as the one used in the call from the CS domain is not included in the offer SDP description sent from the originating side; the MGCF (B) responds with an answer SDP in a SIP response message to refuse all of options provided in the offer SDP, and provides a new offer SDP including the codec used in the call from the CS domain to initiate a negotiation of SDP once again; then the MGCF (A) responds with an answer SDP to accept the new offer SDP, and selects the codec used in the call from the CS domain. Here, in order to further ensure the success of the second negotiation, the MGCF (B) may carry an additional indication in the new offer SDP description, which tells the MGCF (A) to use the provided codec unconditionally.

Step104. When the called party rings or answers the incoming call to require to establish the media channel, the MGCF (B) connects the two IP ports respectively allocated for the segment of CS→IMS and the segment of IMS→CS on the IM-MGW by a gateway control protocol.

In this embodiment, the possible transcoding can be avoided by selecting the same codec as the one used in the call from the CS domain via the negotiation of SDP.

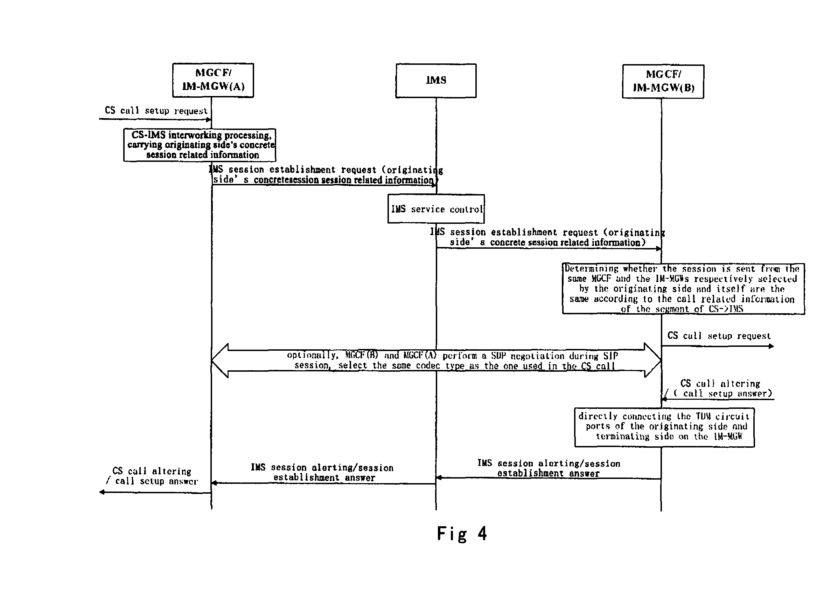

Let us see the another embodiment, as shown in Fig 4 (and with reference to Fig. 1). In this embodiment, it is different from the above one in that the session related information is added to be transmitted, which is correlated with the call segment CS→IMS. the MGCF□B□ makes a judgment according to the added information and performs the processing for optimizing bearer control. The procedure is as follows in detail:
Step201. When receiving the call setup request from the TDM bearer based CS domain, the MGCF (A) in the originating side (the first control entity) sends INVITE to the IP bearer based IMS domain. The concrete information correlated with the bearer control of the call segment from the TDM bearer based network domain or the intra-office POTS subscriber to the IP bearer based network domain is added in the carried SDP, and the concrete information includes corresponding media gateway identifier (the identifier of the originating side MGCF, the gateway identifier of the originating side IM-MGW, the identifier of the context, and the identifier of the terminations) correlated with the bearer control of the originating side.
Step202. After processed by the IMS domain, the session is routed to the MGCF(B)) according to the service and the route control.
Step203. After receiving the INVITE request from the IMS domain, the MGCF (B) determines whether the session is sent from the same MGCF, according to the originating side's session related information carried in the SDP. For example, if the identifier of the originating side MGCF(A) is the same as that of the terminating side MGCF (B), it is determined that the two are the same one, i.e. MGCF (A) =MGCF (B).
Step204. If the MGCF determines that the incoming call is sent from the same MGCF, the MGCF further determines whether the call is originated from a TDM bearer based CS domain and will be routed to a TDM bearer based CS domain, and whether the IM-MGW selected by the originating side and the terminating side is located within the same physical media gateway, by analyzing other originating side's session related information carried in the SDP. If the two answers are both yes, the optimization processing for avoiding the redundant transcoding and RTP packing is initiated, that is, going to step205.
Step205. The MGCF (B) performs the negotiation of SDP during the SIP session with the MGCF (A), and selects the same codec type as the one used in the CS call. Since when establishing the media channel subsequently, the MGCF will control the IM-MGW by the gateway control protocol to directly connect the TDM circuit ports of the originating side and terminating side.

This step is optional in this embodiment and the main intention of it is to keep the codec information processed in the service layer consistent with actual processing, so as to avoid the problems on the service control or on the charging processing which may be introduced due to the inconsistence between the service layer codec information and actual processing.

The concrete processing of step205 is the same as that of the step 204 in the procedure shown in Fig. 3.

Step206. When the called party rings or answers to require to establish the media channel, the MGCF directly connects the TDM circuit ports of the originating side and the terminating side on the IM-MGW by the gateway control protocol, according to the obtained internal IM-MGW parameters i.e. context identifier of the originating side and identifier of the terminating side so as to avoid the packing and unpacking processing.

In the procedure shown in Fig. 4, the added session related information of the originating side is carried in the SDP to avoid being modified by various nodes to a great extent and to ensure the end to end transmission. The same effect can also be achieved by carrying the information in a specific head field or the message body in a SIP message and forbidding the intermediate network elements to modify this information at the same time.

In the above two embodiments, the description is made by taking the case that the MGCF (A) and MGCF (B) are located in the same physical entity as an example. However, since all the information that the optimization processing requires is carried in the SIP message between MGCF (A) and MGCF (B), it can be seen that MGCF (A) and MGCF (B) may also be two different physical entities respectively controlling two different logic media gateway entities which are located in the same physical entity. In this case, the determination in step 3 described above is not necessary, it is only necessary to determine that the call is originated from a TDM bearer based CS domain, and will be routed to a TDM bearer based CS domain, and the IM-MGWs respectively selected by the originating side and the terminating side are located in the same physical media gateway, the optimization processing for avoiding the redundant transcoding and RTP packing and unpacking can be initiated.

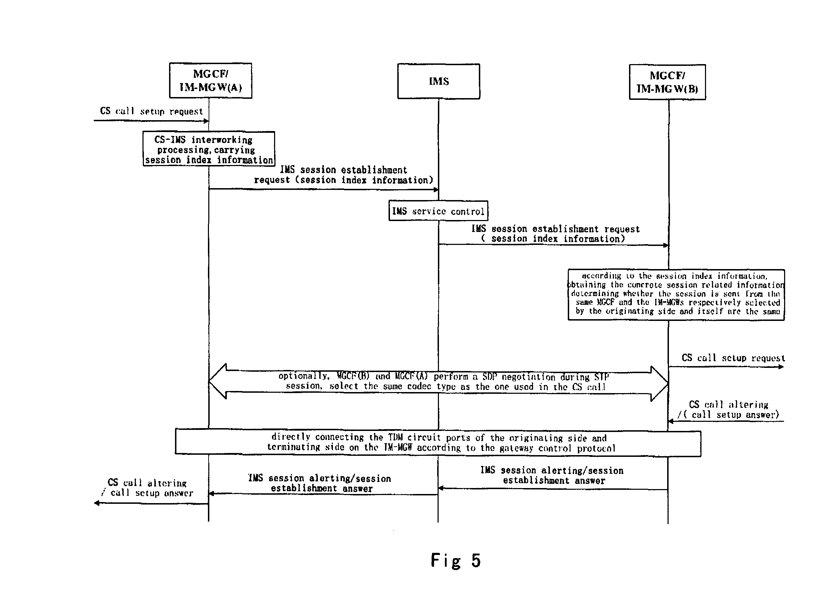

Let us see another embodiment, as shown in Fig. 5, in which an index information is added in the SDP, and the MGCF (B) determines and locates the session related information of the segment of CS→IMS according to the added index information, and therefore performs the optimization processing for the bearer control. It is shown as follows:
Step301. After receiving the call setup request from the TDM bearer based CS domain, the MGCF (A) at the originating side (the first control entity) sends INVITE to the IP bearer based IMS domain, where the information for uniquely identifying the characteristics of the present session segment is included in the carried SDP. For example, o=sessionindexl 2890844526 2890844527 IN IP4 mgcnumber.carrier.com, wherein the "mgcnumber.carrier.com" indicates the originating side MGCF (A) identity and the "sessionindexl" is a transparent parameter, which can be an index used to locate the internal session and the IM-MGW information in this embodiment.
Step302. After processed by the IMS domain, the session is routed to the originating side MGCF (B) according to the service and the route control.
Step303. After receiving the INVITE request from the IMS domain, and according to the SDP information it carried, the MGCF (B) determines whether the session is sent from the same MGCF. In the above example, it is according to the <address> parameter in "o=", i.e. "mgcnumber.carrier.com". If the parameter is the same as the identifier of that of the MGCF (B), it can be determined that the originating side MGCF and the terminating side MGCF are the same one, i.e. MGCF (A) =MGCF (B).

If the MGCF determines that the incoming call is originated from the same MGCF, it can further locates the internal data (i.e. the information correlated with the call segment of CS→ IMS) according to the transparent parameter carried in the SDP, i.e. "sessionindexl"in the example, and obtains the information necessary for controlling the gateway, which includes the gateway identifier of the originating side IM-MGW, the context identifier, and the termination identifiers.

Step304. If the MGCF determines, according to the internal information, that the call is originated from a TDM bearer based CS domain and will be routed to a TDM bearer based CS domain, and the IM-MGW selected by the originating side and the terminating side is located within the same physical media gateway, the MGCF initiates the optimization processing for avoiding the redundant transcoding and RTP packing, that is, going to step305.

Step305. The MGCF (B) performs the negotiation of SDP during the SIP session with the MGCF (A), and selects the same codec type as the one used in the CS call.

This step is similar as the above embodiments, and it is optional. The concrete processing is same as that of the step104 in the procedure shown in Fig. 3.

Step306. When the called party rings or answers to require to establish the media channel, the MGCF directly connects the TDM circuit ports of the originating side and the terminating side on the IM-MGW by using the gateway control protocol according to the obtained internal IM-MGW parameters, i.e. context identifier of the originating side and identifier of the terminating side so as to avoid the packing and unpacking processing.

Similarly, in the procedure shown in Fig. 5, the added information for uniquely identifying the characteristics of the present session segment may be carried in the SDP to avoid being modified by various nodes in the IMS network to a large degree and to ensure the end to end transmission. Alternatively, the information may also be carried in the specific head field or the message body, and the intermediate network elements are forbidden to modify this information at the same time, which can achieve the same effect.

Now let us clarify the differences between the above embodiments. It can be seen that, in the procedure shown in Fig. 3, no additional information is added to be transmitted on the session segment of IMS, therefore, the MGCF (B) for processing the call segment of IMS→CS can only perform the optimization processing for avoiding the possible transcoding according to the original information transmitted in the session along with the additional locally configured information (IP addresses of all the IM-MGWs managed by the present MGCF); while in the procedure shown in the Fig. 4 and Fig. 5, the MGCF (A) for processing the call segment of CS→IMS (MGCF at the originating side) adds the session related information in the sent INVITE, such that the MGCF (A) for processing the call segment of CS→IMS and the MGCF (B) for processing the call segment IMS→CS can not only further or directly determine the call scenario according to the added information, but can also obtain the concrete information correlated with the bearer control of the IM-MGW, which includes the identifier of the originating side IM-MGW, the context identifier, the termination identifiers and so on, thus control the IM-MGW to connect the TDM circuits of the originating side and the terminating side, and thereby avoid the packing, unpacking, and transcoding processing.

The main difference between the procedures shown in Fig. 4 and Fig. 5 is that the procedure in which the MGCF (B) obtains the data required for the optimization processing is different. In detail, in the procedure shown in Fig. 4, the added session related information may be the concrete information correlated with the bearer control at the originating side, such as the identifier of the MGCF and IM-MGW, the context identifier, the termination identifiers and so on. According to the added information, the MGCF (B) and/or the MGCF (A) directly control IM-MGW to perform the optimization processing. In the procedure shown in Fig.5, the added session related information may be session index information. According to the session index information, the MGCF (B) locates the data reserved by the MGCF (A)for the processing of the CS-IMS call segment, the MGCF being located in the same physical entity with the MGCF (B), so that the MGCF (B) and/or the MGCF (A) further control(s) the IM-MGW and perform(s) the optimization processing according to the located information.

On the other hand, since the information required for the optimization processing is directly carried in the SIP messages in Fig. 4, while in Fig. 5, it needs to match the data reserved on the MGCF (A) in processing of the originating side call according to the index information. Therefore the method shown in Fig. 4 is suitable not only for the case where the MGCF (A) and the MGCF (B) are located in the same physical entity, but also for the case where the MGCF (A) and the MGCF (B) are located in different physical entities and respectively control two different logical media gateway entities located in the same physical entity, while the method shown in Fig. 5 is only suitable for the case where the MGCF (A) and the MGCF (B) are located in the same physical entity.

In Fig.3, Fig.4 and Fig.5, the description is made by taking the call scenario of CS→IMS→CS and the media stream being actually exchanged within the same IM-MGW as an example. However, as described in the background, the soft switch also employs an architecture that the bearer control is separated from the call and service control, meanwhile, the soft switch controls the managed gateways including the general media gateway (MGW) the access media gateway (AG) and the residential media gateway which can also be named as Integrated Access Device (IAD) through the gateway control protocol, and the SIP is also used as the session control protocol among the soft switches, that is to say, the soft switch also supports the SIP media negotiation procedure and the control processing and ability of the gateway control protocol. Therefore, the present invention may also be suitable for the case that the same call is successively processed by a soft switch twice and eventually the media stream is exchanged within the same media gateway (including the general media gateway, AG, and IAD) managed by the softswitch. At this time, the IMS may be another softswitch or application server connected the softswitch with IP bearer, the MGCF may be a softswitch, and the IM-MGW may be the general media gateway MGW, or the access media gateway AG, or the residential media gateway which can also be named as integrated access device IAD which are managed by the softswitch. The procedure thereof is similar to the procedure described above, and is omitted here.

It is apparent that the skilled person in the art can make various alternatives and modifications without departing from the scope of the present invention, and therefore, all these alternatives and modifications within principle of the present invention should be covered in the protection scope of the present invention.

## Claims

1. A method for processing bearer control, comprising:
routing a call which is routed from a Time Division Multiplexing (TDM) bearer based network domain or originated by an intra-office Plain Ordinary Telephone Service (POTS) subscriber, into an internet protocol (IP) bearer based network domain, by a first control entity;
receiving the call which is routed back from said IP bearer based network domain and said call is destined to the TDM bearer based network domain or the intra-office POTS subscriber, by a second control entity;
when it's determined that a media stream that enters into and exits from said IP bearer based network domain is exchanged on the same media gateway, performing a media negotiation during the Session Initial Protocol (SIP) session to select a same media codec type as the one used on TDM circuits or subscriber lines at two sides, and controlling a corresponding media gateway to transmit the media stream according to said selected media codec type, by the first and the second control entities.

2. The method according to claim 1, wherein,
locating the first control entity and the second control entity within a same physical entity, configuring in advance IP addresses that can be used by all the media gateways managed by the control entities;
determining by the second control entity whether the media stream which enters into and exits from the IP bearer based network domain is exchanged on the same physical media gateway, according to the originating side IP address of the exchanged media stream transmitted during the negotiation of session description protocol (SDP) and the media gateway which is selected for the call by the second control entity.

3. The method according to claim 1, wherein,
carrying session related information in the call routed by the first control entity; determining by the second control entity whether the media stream that enters into and exits from the IP bearer based network domain is exchanged on the same media gateway according to said session related information.

4. The method according to claim 3, wherein,
said session related information is concrete information correlated with bearer control of the call segment from the TDM bearer based network or the intra-office POTS subscriber to the IP bearer based network; or
said session related information is session index information, and according to the index information, the second control entity determining whether it is located within the same physical entity as the first control entity, locating a call record of the call segment from the TDM bearer based network or the intra-office POTS subscriber to the IP bearer network, which is stored in the first control entity, and obtaining the concrete information correlated with the bearer control of the call segment from the TDM bearer based network or the intra-office POTS subscriber to the IP bearer network.

5. The method according to claim 3, wherein,
carrying said session related information in a specific head field of a SIP message, or a SIP message body, or a specific line in the SDP, or an expanded line in the SDP.

6. The method according to claim 5, wherein,
transmitting said session related information by an intermediate network element in the IP bearer based network transparently.

7. The method according to claim 1, wherein,
taking the media codec type used at the first control entity's TDM circuit or subscriber line as one of options in an offer SDP description, by said first control entity ;
and selecting the media codec type in an answer SDP description responded to the first control entity by said second control entity.

8. The method according to claim 1, wherein,
refusing all the options in the offer SDP description which is provided by said first control entity, and providing the media codec type used in the TDM circuit or subscriber line side in the call segment from the IP bearer based network domain to the TDM bearer based network domain or the intra-office POTS subscriber in a new offer SDP description, by the second control entity; and
selecting by the first control entity the media codec type in an answer SDP description responded to the second control entity.

9. The method according to claim 8, wherein,
carrying by said second control entity an additional indication in the new offer SDP description to indicate the first control entity to accept the offer codec type unconditionally;
accepting by said first control entity the offer codec type unconditionally according to the indication.

10. The method according to claim 1, wherein,
the IP bearer based network domain is an IMS network domain, the media gateway is an IMS media gateway (IM-MGW), and the control entity is an media gateway control function (MGCF) for controlling the IMS media gateway; or
the media gateway is a general media gateway (MGW), or an access media gateway (AG), or a residential media gateway which can also be named as Integrated Access Device (IAD), the control entity is a softswitch for controlling the MGW, or AG, or IAD, and the IP bearer based network domain is a softswitch network domain based on IP bearer which is another softswitch or an application server connected to the control entity with an IP bearer.

11. A method for processing bearer control, comprising:
routing a call which is routed from a TDM bearer based network domain or originated by an intra-office POTS subscriber, into an IP bearer based network domain, and carrying session related information in a sent SIP message by a first control entity;
receiving the call which is routed back from said IP bearer based network domain by a second control entity, said call is destined to a TDM bearer based network domain or an intra-office POTS subscriber,
determining that a media stream that enters into and exits from said IP bearer carrier network domain is exchanged on the same media gateway according to the session related information, controlling the media gateway to directly connect TDM circuit ports or subscriber line ports at two sides to transmit the media stream, by the first control entity and/or the second control entity.

12. The method according to claim 11. wherein,
the session related information is concrete information correlated with a bearer control of the call segment from the TDM bearer based network or the intra-office POTS subscriber to the IP bearer based network, which comprises at least one of an identifier of an originating side media gateway, an identifier of the first control entity corresponding to the originating side media gateway, and a context identifier, and/or a termination identifier.

13. The method according to claim 12, wherein,
locating the first control entity and the second control entity within a same physical entity and controlling a same physical media gateway; or
locating the first control entity and the second control entity in two independent physical control entities, and respectively controlling two different logical media gateways which are located within a same physical media gateway.

14. The method according to claim 11, wherein,
the session related information is session index information;
and according to the index information, the second control entity locating a call record of the call segment from the TDM bearer network or the intra-office POTS subscriber to the IP bearer network, which is stored in the first control entity, and obtaining the concrete information correlated with the bearer control of the call segment from the TDM bearer based network or the intra-office POTS subscriber to the IP bearer network, where the information comprises at least one of an identifier of an originating side media gateway, a context identifier, and a termination identifier.

15. The method according to claim 11, wherein,
carrying the session related information in a specific head field of a SIP message, or a SIP message body, or a specific line in the SDP, or an expanded line in the SDP, to transmit the information to the second control entity.

16. The method according to claim 15, wherein,
transmitting the session related information transparently by an intermediate network element in the IP bearer based network.

17. The method according to claim 11, wherein,
selecting a same media codec type as the one used in the TDM circuit or subscriber line at two sides by performing the media negotiation during the SIP session by the first and the second control entity.

18. The method according to claim 17, wherein,
taking the media codec type used in the native side's TDM circuit or subscriber line as one of options in an offer SDP description by said first control entity;
selecting the media codec type in an answer SDP description responded o the first control entity by said second control entity.

19. The method according to claim 17, wherein,
refusing all the options in the offer SDP description provided by said first control entity, and providing the media codec type used in the TDM circuit or subscriber line side in the call segment from the IP bearer based network domain to the TDM bearer based network domain or the intra-office POTS subscriber in a new offer SDP description, by said second control entity;
selecting the media codec type in an answer SDP description responded to said second control entity by said first control entity.

20. The method according to claim 19, wherein,
carrying an additional indication in the new offer SDP description to indicate the first control entity to accept the offer codec type unconditionally, by said second control entity;
accepting the offer codec type unconditionally according to the indication, said first control entity.

21. The method according to claim 11, wherein,
the IP bearer based network domain is an IMS network domain, the media gateway is an IMS media gateway (IM-MGW), and the control entity is an media gateway control function (MGCF) for controlling the IMS media gateway; or
the media gateway is a general media gateway (MGW), or an access media gateway (AG), or a residential media gateway (IAD), the control entity is a softswitch for controlling the MGW, or AG, or IAD, and the IP bearer based network domain is a softswitch network domain based on IP bearer which is another softswitch or an application server connected to the control entity with an IP bearer.

## Patentansprüche

1. Verfahren zur Trägersteuerungsverarbeitung, umfassend:
Routen eines Anrufs, der aus einer auf dem Zeitmultiplex- bzw. TDM-Träger basierenden Netzdomäne geroutet oder durch einen vermittlungsstelleninternen Teilnehmer des herkömmlichen Fernsprechdienstes POTS eingeleitet wird, in eine auf dem Intemetprotokoll- bzw. IP-Träger basierende Netzdomäne durch eine erste Steuerentität;
Empfangen des Anrufs, der aus der auf dem IP-Träger basierenden Netzdomäne zurückgeroutet wird und wobei der Anruf für die auf dem TDM-Träger basierende Netzdomäne oder den vermittlungsstelleninternen Teilnehmer des POTS bestimmt ist, durch eine zweite Steuerentität;
wenn bestimmt wird, dass ein Medienstrom, der in die auf dem IP-Träger basierende Netzdomäne eintritt und diese verlässt, auf demselben "Media Gateway" ausgetauscht wird, Durchführen einer Medienaushandlung während der "Session Initial Protocol"- bzw. SIP-Sitzung, um einen selben Medien-Codectyp wie den auf TDM-Leitungen oder Teilnehmerleitungen auf zwei Seiten verwendeten auszuwählen, und Steuern eines entsprechenden "Media Gateway", um den Medienstrom gemäß dem ausgewählten Medien-Codectyp zu übertragen, durch die erste und die zweite Steuerentität.

2. Verfahren nach Anspruch 1, umfassend:
Anordnen der ersten Steuerentität und der zweiten Steuerentität in einer selben physischen Entität,
Konfigurieren von IP-Adressen, die von allen "Media Gateways", die durch die Steuerentitäten verwaltet werden, benutzt werden können, im Voraus;
Bestimmen durch die zweite Steuerentität, ob der Medienstrom, der in die auf dem IP-Träger basierende Netzdomäne eintritt und diese verlässt, auf demselben physischen "Media Gateway" ausgetauscht wird, gemäß der ursprungsseitigen IP-Adresse des ausgetauschten Medienstroms, die während der Aushandlung des "Session Description Protocol" SDP übertragen wird, und dem "Media Gateway", das durch die zweite Steuerentität für den Anruf ausgewählt wird.

3. Verfahren nach Anspruch 1, umfassend:
Führen von sitzungsbezogenen Informationen in dem durch die erste Steuerentität gerouteten Anruf;
Bestimmen durch die zweite Steuerentität, ob der Medienstrom, der in die auf dem IP-Träger basierende Netzdomäne eintritt und diese verlässt, auf demselben "Media Gateway" ausgetauscht wird, gemäß den sitzungsbezogenen Informationen.

4. Verfahren nach Anspruch 3, wobei
die sitzungsbezogenen Informationen konkrete Informationen sind, die mit Trägersteuerung des Anrufsegments von dem auf dem TDM-Träger basierenden Netz oder dem vermittlungsstelleninternen POTS-Teilnehmer zu dem auf dem IP-Träger basierenden Netz korreliert sind; oder
die sitzungsbezogenen Informationen Sitzungsindexinformationen sind und die zweite Steuerentität gemäß den Indexinformationen bestimmt, ob sie in derselben physischen Entität wie die erste Steuerentität angeordnet ist, einen Anrufdatensatz des Anrufsegments von dem auf dem TDM-Träger basierenden Netz oder dem vermittlungsstelleninternen POTS-Teilnehmer zu dem IP-Trägernetz, der in der ersten Steuerentität gespeichert ist, lokalisiert und die konkreten Informationen erhält, die mit der Trägersteuerung des Anrufsegments von dem auf dem TDM-Träger basierenden Netz oder dem vermittlungsstelleninternen POTS-Teilnehmer zu dem IP-Trägernetz korreliert sind.

5. Verfahren nach Anspruch 3, umfassend:
Führen der sitzungsbezogenen Informationen in einem spezifischen Kopffeld einer SIP-Nachricht oder einem SIP-Nachrichtenhauptteil oder einer spezifischen Zeile im SDP oder einer expandierten Zeile im SDP.

6. Verfahren nach Anspruch 5, umfassend:
transparentes Übertragen der sitzungsbezogenen Informationen durch ein zwischengeschaltetes Netzelement in dem auf dem IP-Träger basierenden Netz.

7. Verfahren nach Anspruch 1, umfassend:
Nehmen des in der TDM-Leitung oder Teilnehmerleitung der ersten Steuerentität verwendeten Medien-Codectyps als eine von Möglichkeiten in einer Angebot-SDP-Beschreibung durch die erste Steuerentität; und
Auswählen des Medien-Codectyps in einer durch die zweite Steuerentität der ersten Steuerentität geantworteten Antwort-SDP-Beschreibung.

8. Verfahren nach Anspruch 1, umfassend:
Verweigern aller Möglichkeiten in der Angebot-SDP-Beschreibung, die durch die erste Steuerentität bereitgestellt wird, und Bereitstellen des in der TDM-Leitungs- oder Teilnehmerleitungsseite im Anrufsegment von der auf dem IP-Träger basierenden Netzdomäne zu der auf dem TDM-Träger basierenden Netzdomäne oder
dem vermittlungsstelleninternen POTS-Teilnehmer verwendeten Medien-Codectyp in einer neuen Angebot-SDP-Beschreibung durch die zweite Steuerentität; und
Auswählen des Medien-Codectyps in einer der zweiten Steuerentität geantworteten Antwort-SDP-Beschreibung durch die erste Steuerentität.

9. Verfahren nach Anspruch 8, umfassend:
Führen einer zusätzlichen Angabe in der neuen Angebot-SDP-Beschreibung durch die zweite Steuerentität, um der ersten Steuerentität anzuzeigen, den Angebot-Codectyp ohne Bedingungen anzunehmen; und
Annehmen des Angebot-Codectyps durch die erste Steuerentität ohne Bedingungen gemäß der Angabe.

10. Verfahren nach Anspruch 1, wobei
die auf dem IP-Träger basierende Netzdomäne eine IMS-Netzdomäne ist, das "Media Gateway" ein "IMS Media Gateway" IM-MGW ist und die Steuerentität eine "Media Gateway Control Function" MGCF zum Steuern des "IMS Media Gateway" ist; oder das "Media Gateway" ein allgemeines "Media Gateway" MGW oder ein "Access Media Gateway" AG oder ein Wohnungs-"Media Gateway" ist, das auch als "Integrated Access Device" IAD bezeichnet werden kann, die Steuerentität ein "Softswitch" zum Steuern des MGW bzw. AG bzw. IAD ist und die auf dem IP-Träger basierende Netzdomäne eine "Softswitch"-Netzdomäne auf der Basis des IP-Trägers ist, wobei es sich um einen weiteren "Softswitch" oder einen Anwendungsserver handelt, der mit der Steuerentität mit einem IP-Träger verbunden ist.

11. Verfahren zur Trägersteuerungsverarbeitung, umfassend:
Routen eines Anrufs, der aus einer auf dem TDM-Träger basierenden Netzdomäne geroutet oder durch einen vermittlungsstelleninternen POTS-Teilnehmer eingeleitet wird, in eine auf dem IP-Träger basierende Netzdomäne und Führen von sitzungsbezogenen Informationen in einer gesendeten SIP-Nachricht durch eine erste Steuerentität;
Empfangen des Anrufs, der durch eine zweite Steuerentität aus der auf dem IP-Träger basierenden Netzdomäne zurückgeroutet wird, wobei der Anruf für eine auf dem TDM-Träger basierende Netzdomäne oder einen vermittlungsstelleninternen POTS-Teilnehmer bestimmt ist,
Bestimmen, dass ein Medienstrom, der in die auf dem IP-Träger basierende Trägernetzdomäne eintritt und diese verlässt, auf demselben "Media Gateway" ausgetauscht wird, gemäß den sitzungsbezogenen Informationen, Steuern des "Media Gateway", um TDM-Leitungsports oder Teilnehmerleitungsports auf zwei Seiten direkt zu verbinden, um den Medienstrom zu übertragen, durch die erste Steuerentität und/oder die zweite Steuerentität.

12. Verfahren nach Anspruch 11, wobei
die sitzungsbezogenen Informationen konkrete Informationen sind, die mit einer Trägersteuerung des Anrufsegments von dem auf dem TDM-Träger basierenden Netz oder dem vermittlungsstelleninternen POTS-Teilnehmer zu dem auf dem IP-Träger basierenden Netz korreliert sind, die eine Kennung eines ursprungsseitigen "Media Gateway" und/oder eine Kennung der ersten Steuerentität entsprechend dem ursprungsseitigen "Media Gateway" und/oder eine Kontextkennung und/oder eine Abschlusskennung umfassen.

13. Verfahren nach Anspruch 12, umfassend:
Anordnen der ersten Steuerentität und der zweiten Steuerentität in einer selben physischen Entität und Steuern eines selben physischen "Media Gateway"; oder
Anordnen der ersten Steuerentität und der zweiten Steuerentität in zwei unabhängigen physischen Steuerentitäten und jeweils Steuern von zwei verschiedenen logischen "Media Gateways", die in einem selben physischen "Media Gateway" angeordnet sind.

14. Verfahren nach Anspruch 11, wobei
die sitzungsbezogenen Informationen Sitzungsindexinformationen sind; und gemäß den Indexinformationen die zweite Steuerentität einen Anrufdatensatz des Anrufsegments von dem TDM-Trägernetz oder dem vermittlungsstelleninternen POTS-Teilnehmer zu dem IP-Trägernetz, der in der ersten Steuerentität gespeichert ist, lokalisiert und die konkreten Informationen erhält, die mit der Trägersteuerung des Anrufsegments von dem auf dem TDM-Träger basierenden Netz oder dem vermittlungsstelleninternen POTS-Teilnehmer zu dem IP-Trägernetz korreliert sind, wobei die Informationen eine Kennung eines ursprungsseitigen "Media Gateway" und/oder eine Kontextkennung und/oder eine Abschlusskennung umfassen.

15. Verfahren nach Anspruch 11, umfassend:
Führen der sitzungsbezogenen Informationen in einem spezifischen Kopffeld einer SIP-Nachricht oder einem SIP-Nachrichtenhauptteil oder einer spezifischen Zeile im SDP oder einer expandierten Zeile im SDP, um die Informationen zu der zweiten Steuerentität zu übertragen.

16. Verfahren nach Anspruch 15, umfassend:
transparentes Übertragen der sitzungsbezogenen Informationen durch ein zwischengeschaltetes Netzelement in dem auf dem IP-Träger basierenden Netz.

17. Verfahren nach Anspruch 11, umfassend:
Auswählen eines selben Media-Codectyps wie der in der TDM-Leitung oder Teilnehmerleitung auf zwei Seiten verwendete durch Durchführen der Medienaushandlung während der SIP-Sitzung durch die erste und die zweite Steuerentität.

18. Verfahren nach Anspruch 17, umfassend:
Nehmen des in der TDM-Leitung oder Teilnehmerleitung der nativen Seite verwendeten Medien-Codectyps als eine von Möglichkeiten in einer Angebot-SDP-Beschreibung durch die erste Steuerentität; und
Auswählen des Medien-Codectyps in einer durch die zweite Steuerentität der ersten Steuerentität geantworteten Antwort-SDP-Beschreibung.

19. Verfahren nach Anspruch 17, umfassend:
Verweigern aller Möglichkeiten in der Angebot-SDP-Beschreibung, die durch die erste Steuerentität bereitgestellt wird, und Bereitstellen des in der TDM-Leitungs- oder Teilnehmerleitungsseite im Anrufsegment von der auf dem IP-Träger basierenden Netzdomäne zu der auf dem TDM-Träger basierenden Netzdomäne oder dem vermittlungsstelleninternen POTS-Teilnehmer verwendeten Medien-Codectyps in einer neuen Angebot-SDP-Beschreibung durch die zweite Steuerentität; und
Auswählen des Medien-Codectyps in einer der zweiten Steuerentität geantworteten Antwort-SDP-Beschreibung durch die erste Steuerentität.

20. Verfahren nach Anspruch 19, umfassend:
Führen einer zusätzlichen Angabe in der neuen Angebot-SDP-Beschreibung durch die zweite Steuerentität, um der ersten Steuerentität anzuzeigen, den Angebot-Codectyp ohne Bedingungen anzunehmen; und
Annehmen des Angebot-Codectyps durch die erste Steuerentität ohne Bedingungen gemäß der Angabe.

21. Verfahren nach Anspruch 11, wobei
die auf dem IP-Träger basierende Netzdomäne eine IMS-Netzdomäne ist, das "Media Gateway" ein "IMS Media Gateway" IM-MGW ist und die Steuerentität eine "Media Gateway Control Function" MGCF zum Steuern des "IMS Media Gateway" ist; oder das "Media Gateway" ein allgemeines "Media Gateway" MGW oder ein "Access Media Gateway" AG oder ein Wohnungs-"Media Gateway" ist, das auch als "Integrated Access Device" IAD bezeichnet werden kann, die Steuerentität ein "Softswitch" zum Steuern des MGW bzw. AG bzw. IAD ist und die auf dem IP-Träger basierende Netzdomäne eine "Softswitch"-Netzdomäne auf der Basis des IP-Trägers ist, wobei es sich um einen weiteren "Softswitch" oder einen Anwendungsserver handelt, der mit der Steuerentität mit einem IP-Träger verbunden ist.

## Revendications

1. Procédé de traitement de commande de support, comprenant :
le routage d'un appel qui est routé depuis un domaine de réseau basé sur un support à Multiplexage par Répartition Temporelle (MRT) ou effectué par un abonné à un Service téléphonique ordinaire (POTS) local, dans un domaine de réseau basé sur un support à protocole Internet (IP), par une première entité de commande;
la réception par une seconde entité de commande de l'appel qui est renvoyé depuis ledit domaine de réseau basé sur support IP, ledit appel étant destiné au domaine de réseau basé sur support MRT ou à l'abonné au POTS local ;
quand il est déterminé qu'un flux multimédia entrant dans ledit domaine de réseau basé sur support IP et en sortant est échangé sur la même passerelle multimédia, l'exécution d'une négociation multimédia durant la session de Protocole Initial de Session (SIP) pour sélectionner un même type de codec multimédia que celui utilisé sur des circuits MRT ou des lignes d'abonné des deux côtés, et la commande d'une passerelle multimédia correspondante pour transmettre le flux multimédia en fonction dudit type de codec multimédia sélectionné, par les première et seconde entités de commande.

2. Procédé selon la revendication 1, **caractérisé par**
la localisation de la première entité de commande et de la seconde entité de commande dans une même entité physique, configurant à l'avance des adresses IP qui peuvent être utilisées par toutes les passerelles multimédia gérées par les entités de commande ;
la détermination par la seconde entité de commande que le flux multimédia entrant dans le domaine de réseau basé sur support IP et en sortant est échangé ou non sur la même passerelle multimédia physique, en fonction de l'adresse IP côté expédition du flux multimédia échangé transmis durant la négociation du protocole de description de session (SDP) et la passerelle multimédia qui est sélectionnée pour l'appel par la seconde entité de commande.

3. Procédé selon la revendication 1, **caractérisé par**
l'inclusion d'informations de session dans l'appel routé par la première entité de commande ;
la détermination par la seconde entité de commande que le flux multimédia entrant dans le domaine de réseau basé sur support IP et en sortant est échangé ou non sur la même passerelle multimédia en fonction desdites informations de session.

4. Procédé selon la revendication 3, dans lequel
lesdites informations de session sont des informations réelles corrélées avec une commande de support du segment d'appel depuis le réseau basé sur support MRT ou l'abonné au POTS local jusqu'au réseau basé sur support IP ; ou
lesdites informations de session sont des informations d'indice de session, et en fonction des informations d'indice, la seconde entité de commande détermine qu'elle est située ou non dans la même entité physique que la première entité de commande, localise un enregistrement d'appel du segment d'appel depuis le réseau basé sur support MRT ou l'abonné au POTS local jusqu'au réseau basé sur support IP, lequel est mémorisé dans la première entité de commande, et obtient les informations réelles corrélées avec la commande de support du segment d'appel depuis le réseau basé sur support MRT ou l'abonné au POTS local jusqu'au réseau basé sur support IP.

5. Procédé selon la revendication 3, **caractérisé par**
l'inclusion desdites informations de session dans un champ d'en-tête spécifique d'un message SIP, ou d'un corps de message SIP, ou d'une ligne spécifique dans le SDP, ou d'une ligne étendue dans le SDP.

6. Procédé selon la revendication 5, **caractérisé par**
la transmission transparente desdites informations de session par un élément de réseau intermédiaire dans le réseau basé sur support IP.

7. Procédé selon la revendication 1, **caractérisé par**
l'utilisation du type de codec multimédia utilisé au niveau du circuit MRT ou de la ligne d'abonné de la première entité de commande comme l'une des options dans une description SDP d'offre, par ladite première entité de commande ;
et la sélection du type de codec multimédia dans une description SDP de réponse adressée en réponse par ladite seconde entité de commande à la première entité de commande.

8. Procédé selon la revendication 1, **caractérisé par**
le refus de toutes les options dans la description SDP d'offre qui est fournie par ladite première entité de commande, et la fourniture du type de codec multimédia utilisé côté circuit MRT ou ligne d'abonné dans le segment d'appel depuis le domaine de réseau basé sur support IP jusqu'au domaine de réseau basé sur support MRT ou l'abonné au POTS local dans une nouvelle description SDP d'offre, par la seconde entité de commande ; et
la sélection par la première entité de commande du type de codec multimédia dans une description SDP de réponse adressée en réponse à la seconde entité de commande.

9. Procédé selon la revendication 8, **caractérisé par**
l'inclusion par ladite seconde entité de commande d'une indication supplémentaire dans la nouvelle description SDP d'offre pour indiquer à la première entité de commande d'accepter inconditionnellement le type de codec d'offre ; l'acceptation inconditionnelle par ladite première entité de commande du type de codec d'offre en fonction de indication.

10. Procédé selon la revendication 1, dans lequel,
le domaine de réseau basé sur support IP est un domaine de réseau IMS, la passerelle multimédia est une passerelle multimédia IMS (IM-MGW), et l'entité de commande est une fonction de commande de passerelle multimédia (MGCF) pour commander la passerelle multimédia IMS ; ou
la passerelle multimédia est une passerelle multimédia générale (MGW), ou une passerelle multimédia d'accès (AG), ou une passerelle multimédia résidentielle qui peut aussi être appelée Dispositif d'Accès Intégré (IAD), l'entité de commande est un commutateur logiciel pour commander la MGW, ou l'AG ou l'IAD, et le domaine de réseau basé sur support IP est un domaine de réseau de commutateur logiciel basé sur support IP qui est un autre commutateur logiciel ou un serveur d'application connecté à l'entité de commande avec un support IP.

11. Procédé de traitement de commande de support, comprenant :
le routage d'un appel qui est routé depuis un domaine de réseau basé sur support MRT ou effectué par un abonné à un POTS local, dans un domaine de réseau basé sur support IP, et l'inclusion d'informations de session dans un message SIP envoyé par une première entité de commande;
la réception par une seconde entité de commande de l'appel qui est renvoyé depuis ledit domaine de réseau basé sur support IP, ledit appel étant destiné à un domaine de réseau basé sur support MRT ou à un abonné à un POTS local ;
la détermination qu'un flux multimédia entrant dans ledit domaine de réseau basé sur support IP et en sortant est échangé ou non sur la même passerelle multimédia, en fonction des informations de session, la commande de la passerelle multimédia pour connecter directement les ports de circuit MRT ou les ports de lignes d'abonné des deux côtés pour transmettre le flux multimédia, par la première entité de commande et/ou la seconde entité de commande.

12. Procédé selon la revendication 11, dans lequel
lesdites informations de session sont des informations réelles corrélées avec une commande de support du segment d'appel depuis le réseau basé sur support MRT ou l'abonné au POTS local jusqu'au réseau basé sur support IP ; lesquelles comprennent au moins l'un d'un identifiant d'une passerelle multimédia côté expédition, d'un identifiant de la première entité de commande correspondant à la passerelle multimédia côté expédition, et d'un identifiant de contexte et/ou d'identifiant de terminaison.

13. Procédé selon la revendication 12, **caractérisé par**
la localisation de la première entité de commande et de la seconde entité de commande dans une même entité physique, et la commande d'une même passerelle multimédia physique ; ou
la localisation de la première entité de commande et de la seconde entité de commande dans deux entités de commande physiques indépendantes, et la commande respective de deux passerelles multimédia logiques différentes qui sont situées dans une même passerelle multimédia physique.

14. Procédé selon la revendication 11, dans lequel
les informations de session sont des informations d'indice de session ;
et en fonction des informations d'indice, la seconde entité de commande localise un enregistrement d'appel du segment d'appel depuis le réseau basé sur support MRT ou l'abonné au POTS local jusqu'au réseau basé sur support IP, lequel est mémorisé dans la première entité de commande, et obtient les informations réelles corrélées avec la commande de support du segment d'appel depuis le réseau basé sur support MRT ou l'abonné au POTS local jusqu'au réseau basé sur support IP, les informations comprenant au moins l'un d'un identifiant d'une passerelle multimédia côté expédition, d'un identifiant de contexte et d'un identifiant de terminaison.

15. Procédé selon la revendication 11, **caractérisé par**
l'inclusion des informations de session dans un champ d'en-tête spécifique d'un message SIP, ou d'un corps de message SIP, ou d'une ligne spécifique dans le SDP, ou d'une ligne étendue dans le SDP, pour transmettre les informations à la seconde entité de commande.

16. Procédé selon la revendication 15, **caractérisé par**
la transmission transparente des informations de session par un élément de réseau intermédiaire dans le réseau basé sur support IP.

17. Procédé selon la revendication 11, **caractérisé par**
la sélection d'un même type de codec multimédia que celui utilisé dans le circuit MRT ou la ligne d'abonné des deux côtés en exécutant la négociation multimédia durant la session SIP par les première et seconde entités de commande.

18. Procédé selon la revendication 17, **caractérisé par**
l'utilisation du type de codec multimédia utilisé au niveau du circuit MRT ou de la ligne d'abonné du côté natif comme l'une des options dans une description SDP d'offre, par ladite première entité de commande ;
la sélection du type de codec multimédia dans une description SDP de réponse adressée en réponse par ladite seconde entité de commande à la première entité de commande.

19. Procédé selon la revendication 17, **caractérisé par**
le refus de toutes les options dans la description SDP d'offre qui est fournie par ladite première entité de commande, et la fourniture du type de codec multimédia utilisé côté circuit MRT ou ligne d'abonné dans le segment d'appel depuis le domaine de réseau basé sur support IP jusqu'au domaine de réseau basé sur support MRT ou l'abonné au POTS local dans une nouvelle description SDP d'offre, par la seconde entité de commande ;
la sélection par ladite première entité de commande du type de codec multimédia dans une description SDP de réponse adressée en réponse à ladite seconde entité de commande.

20. Procédé selon la revendication 19, **caractérisé par**
l'inclusion par ladite seconde entité de commande d'une indication supplémentaire dans la nouvelle description SDP d'offre pour indiquer à la première entité de commande d'accepter inconditionnellement le type de codec d'offre ; l'acceptation inconditionnelle par ladite première entité de commande du type de codec d'offre en fonction de l'indication.

21. Procédé selon la revendication 11, dans lequel,
le domaine de réseau basé sur support IP est un domaine de réseau IMS, la passerelle multimédia est une passerelle multimédia IMS (IM-MGW), et l'entité de commande est une fonction de commande de passerelle multimédia (MGCF) pour commander la passerelle multimédia IMS ; ou
la passerelle multimédia est une passerelle multimédia générale (MGW), ou une passerelle multimédia d'accès (AG), ou une passerelle multimédia résidentielle (IAD), l'entité de commande est un commutateur logiciel pour commander la MGW, ou l'AG ou l'IAD, et le domaine de réseau basé sur support IP est un domaine de réseau de commutateur logiciel basé sur support IP qui est un autre commutateur logiciel ou un serveur d'application connecté à l'entité de commande avec un support IP.
